Europäisches Patentamt

European Patent Office

Office européen des brevets

(11) Veröffentlichungsnummer: **0 001 648**
B1

(12) **EUROPÄISCHE PATENTSCHRIFT**

(21) Anmeldenummer: 78200088.9

(22) Anmeldetag: 10.07.78

(51) Int. Cl.³: **G 05 B 19/21,**
**B 60 K 31/00**

(54) Digitaler Stellregelkreis, insbesondere für Fahrgeschwindigkeitsregler in Kraftfahrzeugen

(30) Priorität: 15.10.77 DE 2746445

(43) Veröffentlichungstag der Anmeldung:
02.05.79 Patentblatt 79/09

(45) Bekanntmachung des Hinweises auf die Patenterteilung:
07.01.81 Patentblatt 81/01

(84) Benannte Vertragsstaaten:
DE FR GB SE

(56) Entgegenhaltungen:
DE - A - 1 513 513
DE - A - 2 006 367
DE - A - 2 418 909
GB - 926 557
US - A - 3 566 239
US - A - 3 736 486
US - A - 3 804 193
US - A - 3 997 826

ELECTRONIC INDUSTRIES, vol. 22,
Juni 1963, Nr. 6
Radnor,
C. F. WINDER "A look at coded disks and
encoders", Seiten F2 bis F7 und F26 bis F27

SIEMENS ZEITSCHRIFT, Vol. 49, Heft 9, 1975
Erlangen
E. PABSTHART "Neue Baugruppen des
Schaltkreissystems Simatic C2",
Seiten 596 bis 599

(73) Patentinhaber: ROBERT BOSCH GMBH
Postfach 50
D - 7000 Stuttgart 1 (DE)

(72) Erfinder: Schneider, Erich, Dipl.-Ing.
Entengasse 14
D - 7125 Kirchheim (DE)
Fleischer, Helmut, Ing.grad.
Hermann-Essig-Strasse 106
D - 7141 Schwieberdingen (DE)
Nonnenmann, Wolfgang, Dipl.-Ing.
Hauffstrasse 10
D - 7530 Pforzheim (DE)

(74) Vertreter: Vetter, Hans, Dr.-Ing.
Robert-Bosch-Platz 1
D - 7016 Gerlingen-Schillerhöhe (DE)

Die Erfindung geht aus von einem digitalen Stellregelkreis, insbesondere für Fahrgeschwindigkeitsregler in Kraftfahrzeugen, nach der Gattung des Hauptanspruchs. Es ist schon ein solcher Stellregelkreis aus der Zeitschrift "Electronic Industries" 22 (1963), Seiten F2 bis F7 und F26 bis F27 bekannt, der als Stellungsdetektor eine mit Marken versehene Scheibe aufweist, die durch eine Abtastvorrichtung abtastbar sind, um einen Istwert zu erfassen. Dies erfolgt in einer digitalen Zählvorrichtung. Bei einer derartigen Erfassung eines Istwerts besteht das Problem, daß ein einmal aufgetretener Fehler ständig mitgeführt wird und einen falschen Istwert vortäuscht. Dazu ist in einer zweiten Spur wenigstens eine Marke angeordnet, die als Normierung in der Nullstellung dient. Eine Normierungsmarke ist jedoch in vielen Fällen nicht ausreichend und es besteht das Problem, bei weiteren Marken eine Zuordnung der jeweiligen Marke zur entsprechenden Normierung zu finden.

Dazu wird in der DE—A—2 418 909 vorgeschlagen, über den Verstellweg mehrere Festwertgeber anzuordnen, die beim Passieren einer der entsprechenden Position zugeordneten Zählerstand vorgeben, also eine Normierung herbeiführen. Solche zusätzlichen Geber bedeuten jedoch einen erheblichen Aufwand, verteuern die Anlage und sind eine Quelle zusätzlicher Störungen.

Die Erfindung, wie sie im Anspruch 1 gekennzeichnet ist, löst die Aufgabe, bei einem digitalen Stellregelkreis mit einem digitalen Stellungsdetektor möglichst einfach unter Verwendung van nur zwei Abtasteinrichtungen den Istwert zu erfassen und in beiden Endstellungen des Stellungsdetektors eine ständige Normierung herbeizuführen.

Die durch die Erfindung erreichten Vorteile sind im wesentlichen darin zu sehen, daß durch eine einfach und billig zu realisierende zusätzliche Marke unter Verwendung der ohnehin schon vorhandenen Abtastsensoren eine Normierung des Istwerts in beiden Endstellungen durchgeführt werden kann. Durch die rein elektronische Auswertung und Normierung wird neben der Verbilligung der Anlage eine Reduzierung mechanischer Teile erreicht.

Durch die in den Unteransprüchen aufgeführten Maßnahmen sind vorteilhafte Weiterbildungen und Verbesserungen des im Hauptanspruch angegebenen Stellregelkreises möglich.

Ein Ausführungsbeispiel der Erfindung ist in der Zeichnung dargestellt und in der nachfolgenden Beschreibung näher erläutert. Es zeigen Fig. 1 das Ausführungsbeispiel im Blockschaltbild, Fig. 2 eine Ausführungsform des digitalen Stellungsdetektors, Fig. 3 ein Schaltungsbeispiel für eine Erkennungslogik zur Erkennung der beiden Endstellungen, Fig. 4 ein erstes Schaltungsbeispiel für eine Korrekturvorrichtung, Fig. 5 ein zweites Schaltungsbeispiel für eine Korrekturvorrichtung und Fig. 6 ein Schaltungsbeispiel für eine Vergleichsvorrichtung mit einer toten Zone.

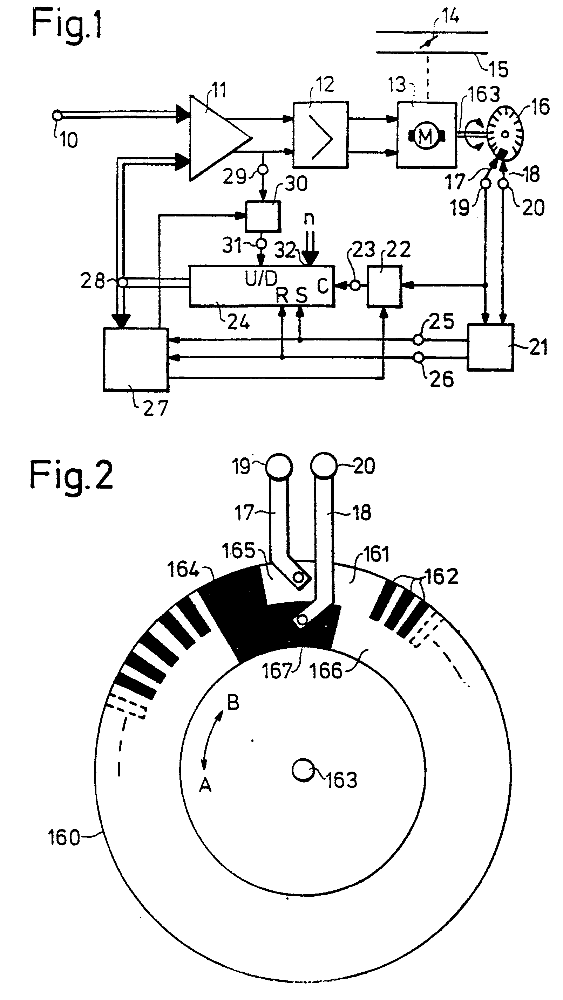

In dem in Fig. 1 dargestellten Ausführungsbeispiel ist eine mit einem Sollwert beaufschlagte Klemmenanordnung 10 mit dem Sollwert-Eingang einer Vergleichsvorrichtung 11 verbunden, die vorzugsweise ein digitaler Komparator ist. Solche digitalen Komparatoren sind im Handel erhältlich. Zwei Ausgänge des Komparators 11 sind über eine Verstärkerstufe 12 mit einer Stellvorrichtung 13 verbunden, die z.B. ein Stellmotor sein kann. Ist der Sollwert größer als der Istwert, so liegt an dem ersten Ausgang des Komparators 11 ein Steuersignal an, im umgekehrten Fall am anderen Ausgang. Die Steuerung einer Stellvorrichtung, insbesondere eines Stellmotors, durch zwei Signale, die eine Bewegung in die beiden Stellrichtungen auslösen sollen, ist z.B. aus der DT—A—2 350 958 bekannt. Die Stellvorrichtung 13 steuert eine Drosselklappe 14 im Ansaugrohr 15 einer Brennkraftmaschine. Dadurch kann in Abhängigkeit vom eingegebenen Sollwert die Geschwindigkeit eines Fahrzeugs konstant gehalten werden. Natürlich können durch die Stellvorrichtung 13 auch andere Einrichtungen gesteuert bzw. geregelt werden.

Synchron mit der Bewegung der Stellvorrichtung 13 wird ein Stellungsdetektor 16 bewegt, von dem eine Ausführungsform in Fig. 2 noch näher beschrieben wird. Zwei Abtastvorrichtungen 17, 18 zur Abtastung von Marken auf dem Stellungsdetektor 16 sind über Klemmen 19, 20 mit einer Erkennungslogik 21 zur Erkennung der beiden Endstellungen des Stellungsdetektors 16, bzw. der Stellvorrichtung 13 verbunden. Die Klemme 19 ist weiterhin über ein erstes Verknüpfungsglied 22 mit einer Klemme 23 verbunden, die an den Takteingang C eines digitalen Zählers 24 angeschlossen ist. Zwei Ausgänge der Erkennungslogik 21 sind über Klemmen 25 26 sowohl mit dem Rücksetzeingang R, bzw. dem Setzeingang S des Zählers 24, wie auch mit zwei Eingängen einer Korrekturvorrichtung 27 verbunden, die zur Korrektur fehlerhafter Zählerstände im Zähler 24 dient. Die Zahlenausgänge des Zählers 24 sind über eine Klemmenanordnung 28 sowohl mit dem Istwert-Eingang des Komparators 11, wie auch mit der Korrekturvorrichtung 27 verbunden. Einer der Ausgänge des Komparators 11 ist über eine Klemme 29 mit einem zweiten Verknüpfungsglied 30 verbunden, dessen Ausgang über eine Klemme 31 an den Zählrichtungseingang U/D des Zählers 24 angeschlossen ist. Die Korrekturvorrichtung 27 ist mit beiden Verknüpfungsgliedern 22, 30 verbunden. An Zahleneingängen 32 ist vorzugsweise durch feste Verdrahtung ein digitaler Zahlenwert n angelegt, der der Zahl der Marken auf dem Stellungsdetektor 16 entspricht.

Die in Fig. 2 dargestellte Ausführungsform des digitalen Stellungsdetektors 16 besteht aus einem kreisscheibenförmigen, isolierenden Grundkörper 160, bei dem eine Seite im Bereich einer Randzone 161 radial verlaufende, streifenförmige Marken 162 aufweist. Diese Marken 162 erstrecken sich äquidistant über den ganzen Umfangsbereich; sie sind jedoch zur Vereinfachung der Darstellung nur für einen Teilbereich dargestellt. Der scheibenförmige Grundkörper 160 wird durch die Stellvorrichtung 13 um eine Achse 163 gedreht. Die Marken 162 sind untereinander elektrisch leitend verbunden und bestehen selbst aus elektrisch leitendem Material. Sie können z.B. durch Aufdampfen von Metall erzeugt sein. Die Abtastvorrichtungen 17, 18 sind als Schleifkontakte ausgebildet, wobei der Schleifkontakt 17 bei einer Drehbewegung des Grundkörpers 160 die Marken 162 überstreicht. Die beiden Endstellungen des Schleifkontakts 17 sind durch eine kontaktierte Zone 164 und eine nichtkontaktierte Zone 165 festgelegt.

Anstelle der Abtastung von elektrisch leitenden Marken durch Schleifkontakte können die Marken auch als optische Marken, insbesondere Öffnungen oder Spiegel ausgebildet sein, wobei eine Lichtsender/Lichtempfänger-Kombination diese Marken abtastet. Weiterhin können auch magnetische Detektoren Marken aus magnetisch wirksamem Material abtasten.

Der zweite Schleifkontakt 18 überstreicht eine zweite konzentrische Zone 166, die parallel zur Randzone 161 verläuft. Bis auf eine kontaktierte Zone 167, die sich über den Bereich der beiden Endstellungen erstreckt, ist diese konzentrische Zone 166 kontaktfrei. Sämtliche Marken 162 und kontaktierte Zonen 164, 167 sind in nicht näher dargestellter Weise mit dem positiven Pol einer Versorgungsspannungsquelle verbunden.

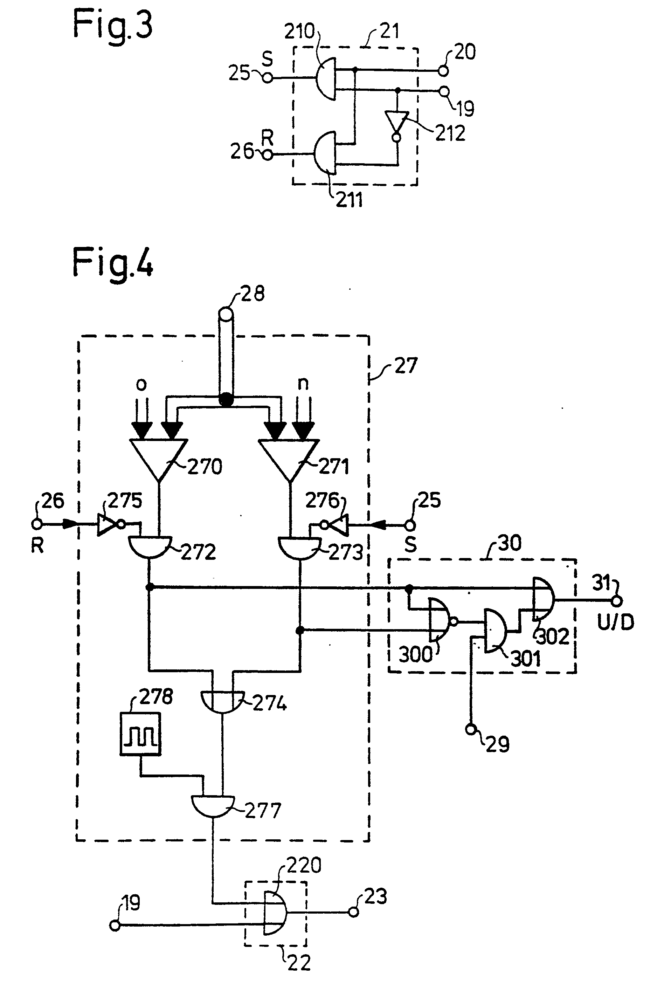

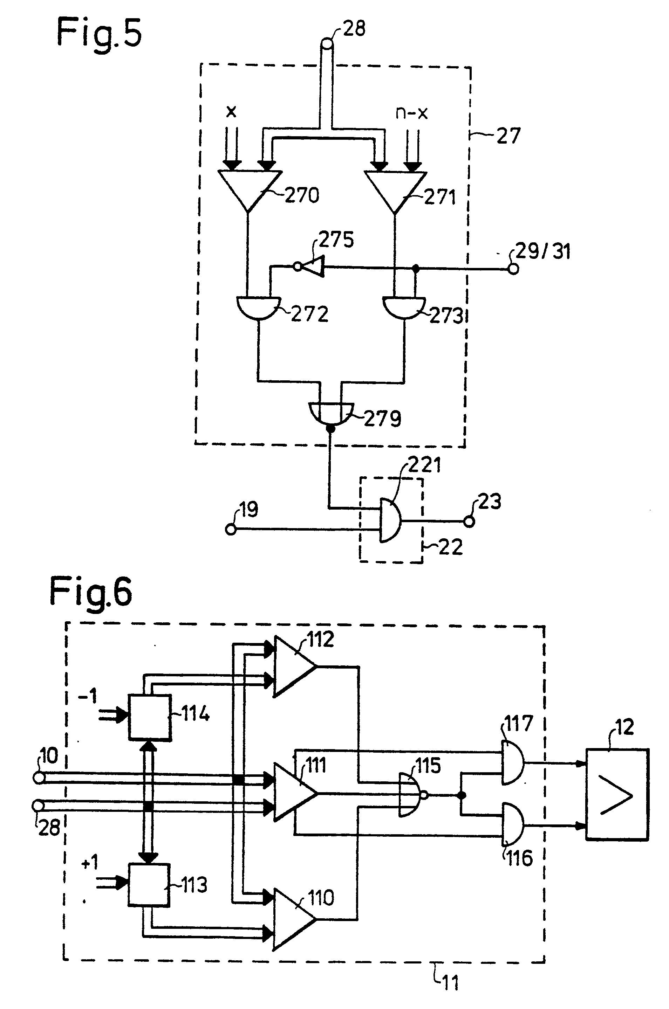

Die Wirkungsweise der in Fig. 1 dargestellten Anordnung im Zusammenhang mit dem Stellungsdetektor 16 besteht darin, daß im digitalen Zähler 24 immer ein Zahlenwert vorliegt, der der Stellung des Stellungsdetektors 16 und damit der Stellung der Stellvorrichtung 13 entspricht. Dieser Zahlenwert wird daher dem digitalen Komparator 11 als Istwert zugeführt. Der vorgegebene Sollwert an der Klemmenanordnung 10 liegt in digitaler Form vor, was unter Umständen bei analoger Erfassung oder Vorgabe dieses Sollwerts einen Analog-Digital-Wandler erfordert. Die dargestellte Stellung der Schleifkontakte 17, 18 in Fig. 2 relativ zu den Kontaktierungen 164, 167 stellt die erste Endstellung dar. Die Kombination eines 0-Signals an der Klemme 19 und eines 1-Signals an der Klemme 20 erkennt die Erkennungslogik 21 als diese erste Endstellung und setzt den digitalen Zähler 24 über den Rücksetzeingang R auf den kleinsten Zahlenwert zurück. Bewegt sich der Stellungsdetektor 16 nun in die Richtung A so werden die Marken, bzw. die über diese Marken 162 ausgelösten Signale über die Klemme 19 im digitalen Zähler 24 aufsummiert. Bei dieser Bewegungsrichtung liegt an der Klemme 29 ein 1-Signal vor, durch das die Zählrichtung im Zähler 24 auf Aufwärtszählen geschaltet ist. Ist der Sollwert an der Klemme 10 erreicht, so liegen an beiden Ausgängen des digitalen Komparators 11 0-Signale, wodurch die Stellvorrichtung 13 in ihrer erreichten Stellung verharrt. Bei Verringerung des Sollwerts bewegt sich die Stellvorrichtung 13 in die umgekehrte Richtung, an der Klemme 29 liegt ein 0-Signal und durch Signale der Marken 162 wird abwärts gezählt. Erreichen die Schleifkontakte 17, 18 ihre zweite Endstellung, so liegen an beiden Klemmen 19, 20 1-Signale. Diese Signalkombination wird in der Erkennungslogik 21 als zweite Endstellung erkannt und der Zähler 24 wird über den Setzeingang S auf den angelegten Zahlenwert n gesetzt. Bei fehlerloser Zählung wäre das Setzen und Rücksetzen des Zählers 24 nicht erforderlich, jedoch sind Fehler in der Zählung durch Störimpulse und Prellen an den Konträndern nicht zu vermeiden. Durch Setzen und Rücksetzen des Zählers 24 in den beiden Endstellungen wird ein eventueller Fehler jedesmal wieder ausgeglichen. Die Korrekturvorrichtung 27 liefert eine weitergehende Korrektur und zwar dadurch, daß durch diese Korrekturvorrichtung die Stellbewegung in Richtung einer der Endstellungen aufrechterhalten bleibt, wenn durch Zählfehler der zugehörige Endzählerstand bereits vor Erreichen der Endstellung im Zähler 24 vorliegt. Eine genauere Beschreibung der Funktion erfolgt im Zusammenhang mit den Fig. 4 und 5.

Das in Fig. 3 dargestellte Schaltbeispiel für die Erkennungslogik 21 zeigt ein erstes UND-Gatter 210, dessen beide Eingänge mit den Klemmen 19, 20 und dessen Ausgang mit der Klemme 25 verbunden ist. Ein zweites UND-Gatter 211 ist mit seinem ersten Eingang an die Klemme 20, mit seinem zweiten Eingang über einen Inverter 212 an die Klemme 19 und mit seinem Ausgang an die Klemme 26 angeschlossen.

Um an einer der beiden Klemmen 25, 26 ein 1-Signal zu erzeugen, muß auf jeden Fall an der Klemme 20 ein 1-Signal anliegen. Dies ist jedoch nur in den beiden Endstellungen der Fall, da sich die Kontaktierung 167 nur im Bereich der beiden Endstellungen erstreckt. Liegt gleichzeitig an der Klemme 19 ein 0-Signal, was der ersten Endstellung entspricht, so ist das UND-Gatter 210 gesperrt und am Ausgang des UND-Gatters 211 erscheint ein Rücksetzsignal für den Zähler 24. Bei einem 1-Signal an der Klemme 19, was der zweiten Endstellung entspricht, wird ein Setzsignal an der Klemme 25 erzeugt.

Bei dem in Fig. 4 dargestellten ersten Schaltungsbeispiel für die Korrekturvorrichtung 27 im Zusammenhang mit den beiden Verknüpfungsgliedern 22, 30 ist die Klemmenanordnung 28 jeweils mit dem Istwerteingang zweier digitaler Komparatoren 270, 271 verbunden. An dem Sollwerteingang des Komparators 270 ist vorzugsweise durch feste Verdrahtung die der ersten Endstellung entsprechende Zahl Null angelegt und an dem Sollwerteingang des Komparators 271 die Zahl n, die der zweiten Endstellung entspricht. Die Ausgänge der Komparatoren 270, 271 sind jeweils über ein UND-Gatter 272, 273 an die beiden Eingänge eines ODER-Gatters 274 angeschlossen. Die Klemme 26 ist über einen Inverter 275 an den zweiten Eingang des UND-Gatters 272 und die Klemme 25 ist über einen Inverter 276 an den zweiten Eingang des UND-Gatters 273 angeschlossen. Der Ausgang des ODER-Gatters 274 ist über ein weiteres UND-Gatter 277 an einen Eingang eines ODER-Gatters 220 angeschlossen, das als erstes Verknüpfungsglied 22 dient. Die Klemme 19 ist an einen weiteren Eingang des ODER-Gatters 220 angeschlossen, dessen Ausgang mit der Klemme 23 verbunden ist. Ein zweiter Eingang des UND-Gatters 227 ist mit einem Frequenzgenerator 278 verbunden. Der Ausgang des UND-Gatters 273 ist über ein NOR-Gatter 300 mit einem Eingang eines UND-Gatters 301 verbunden, dessen Ausgang über ein ODER-Gatter 302 an die Klemme 31 angeschlossen ist. Der Ausgang des UND-Gatters 272 ist sowohl an einen zweiten Eingang des NOR-Gatters 300, wie auch an einen zweiten Eingang des ODER-Gatters 302 angeschlossen. Die Klemme 29 ist mit einem weiteren Eingang des UND-Gatters 301 verbunden. Liegt an der Klemmenanordnung 28 einer der beiden Zahlenwerte Null oder n an, die den beiden Endstellungen entsprechen, so wird am betreffenden Komparatorausgang ein 1-Signal erzeugt. Wenn durch die Erkennungslogik 21 gleichzeitig die Endstellung erkannt wird, so wird das dadurch erzeugte 1-Signal über die Klemmen 25 bzw. 26 als 0-Signal über die Inverter 276 bzw. 275 den UND-Gattern 273 bzw. 272 zugeführt. Die UND-Gatter bleiben dadurch gesperrt; die Korrekturvorrichtung 27 braucht nicht eingreifen. Liegt dagegen z.B. an der Klemmenanordnung 28 der Zahlenwert n an ohne daß die Erkennungslogik 21 die zugehörige zweite Endstellung erkennt, so erscheint am Ausgang des UND-Gatters 273 ein 1-Signal, durch das über das ODER-Gatter 274 das UND-Gatter 277 für Impulse des Frequenzgenerators 278 durchlässig wird. Dadurch gelangen Zählimpulse dieses Frequenzgenerators 278 über das ODER-Gatter 220 zum Takteingang C des digitalen Zählers 24. Durch das 1-Signal am Ausgang des UND-Gatters 273 wird gleichzeitig über das NOR-Gatter 300 das UND-Gatter 301 gesperrt, so daß an der Klemme 31 ein 0-Signal liegt. Die Zählimpulse des Frequenzgenerators 278 werden dadurch rückwärts gezählt. Da nach einem solchen Zählimpuls an der Klemme 28 wieder der Zahlenwert n−1 anliegt wird wieder eine Marke 162 im Zähler 24 aufwärts gezählt. Dieser Vorgang setzt sich solange fort, bis der Stellungsdetektor 16 seine tatsächliche Endstellung erreicht hat.

Im umgekehrten Fall, wenn an der Klemmenanordnung 28 der Zahlenwert Null anliegt ohne daß über die Klemme 26 das Erreichen der Endstellung gemeldet wird, erfolgt wiederum die Freigabe von Zählimpulsen vom Frequenzgenerator 278 auf analoge Weise über das ODER-Gatter 274. Das 1-Signal am Ausgang des UND-Gatters 272 sorgt über das ODER-Gatter 302 dafür, daß aufwärts gezählt wird.

Das in Fig. 5 dargestellte zweite Schaltungsbeispiel für die Korrekturvorrichtung 27 weist analog beschaltete Bauteile 270 bis 273 auf. Der Inverter 275 ist jedoch nunmehr statt mit der Klemme 26 mit der Klemme 29 verbunden. Das zweite Verknüpfungsglied 30 entfällt, so daß die Klemmen 29 und 31 zu einer einzigen Klemme zusammenfallen. Unter Wegfall des Inverters 276 ist der zweite Eingang des UND-Gatters 273 ebenfalls mit der Klemme 29 bzw. 31 verbunden. Der Sollwerteingang des Komparators 270 ist vorzugsweise durch feste Verdrahtung mit dem im Vergleich zur Zahl n kleinen Zahlenwert x beaufschlagt, während der Sollwerteingang des Komparators 271 mit dem Zahlenwert n−x beaufschlagt ist. Die Ausgänge der UND-Gatter 272, 273 sind mit Eingängen eines NOR-Gatters 279 verbunden, dessen Ausgang über ein UND-Gatter 221 mit der Klemme 23 verbunden ist. Der zweite Eingang des UND-Gatters 221 ist an die Klemme 19 angeschlossen. Das UND-Gatter 221 stellt das erste Verknüpfungsglied 22 dar.

Die Wirkungsweise des in Fig. 5 dargestellten Schaltungsbeispiels besteht darin, daß bei einem sehr kleinen Zahlenwert x, der z.B. 1 oder 2 sein kann, vor den beiden Endstellungen der Zähler 24 für weitere Zählimpulse vom Stellungsdetektor 16 über das UND-Gatter 221 gesperrt wird. Dadurch bewegt sich der Stellungsdetektor 16 bis in seine Endstellung, da der an der Klemme 10 vorgegebene Sollwert für eine Endstellung durch den Zähler 24 nicht erreicht werden kann. Erst bei Erreichen der Endstellung wird der Zähler 24 durch die Erkennungslogik 21 gesetzt, bzw. rückgesetzt. Ist der kleine Zahlenwert x vor der ersten Endstellung erreicht, so spricht der Komparator 270 an. während bei Erreichen des kleinen Zahlenwerts x vor der zweiten Endstellung der Komparator 271 anspricht. Im ersten Fall erfolgt eine Sperrung des UND-Gatters 221, wenn gleichzeitig über die Klemme 29 ein Abwärtszählen registriert wird, im zweiten Fall, wenn gleichzeitig ein Aufwärtszählen über die Klemme 29, bzw. das UND-Gatter 273 registriert wird. Wird dagegen z.B. beim Aufwärtszählen ab der ersten Endstellung der Zahlenwert x erreicht, so spricht das UND-Gatter 272 nicht an, da das 1-Signal an der Klemme 29 als 0-Signal am Ausgang des Inverters 275 vorliegt.

Das in Fig. 6 dargestellte Schaltungsbeispiel

# 0001648

für eine Vergleichsvorrichtung 11 mit einer toten Zone weist drei digitale Komparatoren 110, 111, 112 auf. Die Klemmenanordnung 10 ist mit dem Sollwert-Eingängen sämtlicher Komparatoren 110 bis 112 verbunden. Die Klemme 28 ist mit dem Istwert-Eingang des Komparators 111, über eine erste Addierstufe 113 mit dem Istwert-Eingang des Komparators 110 und über eine zweite Addierstufe 114 mit dem Istwert-Eingang des Komparators 112 verbunden. Die Addierstufen 113, 114 sind digitale Addierer, wobei durch die erste Addierstufe 113 dem an der Klemmenanordnung 28 anliegenden Zahlenwert die Zahl 1 hinzugefügt wird und wobei durch die zweite Addierstufe 114 diesem Zahlenwert die Zahl 1 abgezogen wird. Je ein Ausgang der Komparatoren 110 bis 112 zur Erzeugung eines Signals bei Übereinstimmung von Istwert und Sollwert ist mit je einem Eingang eines NOR-Gatters 115 verbunden, dessen Ausgang an je einen Eingang zweier UND-Gatter 116, 117 angeschlossen ist. Die beiden Ausgänge der UND-Gatter 116, 117 sind gemäß Fig. 1 mit der Verstärkerstufe 12 verbunden. Ein weiterer Ausgang des Komparators 111 zur Erkennung des Zustands "Sollwert größer als Istwert" ist mit einem weiteren Eingang des UND-Gatters 117 verbunden. Ein weiterer Ausgang des Komparators 111 zur Erkennung des Zustandes "Sollwert kleiner als Istwert" ist mit einem weiteren Eingang des UND-Gatters 116 verbunden.

Das Ziel und die Wirkungsweise des in Fig. 6 dargestellten Schaltungsbeispiels für eine Vergleichvorrichtung mit einer toten Zone besteht darin, daß im Bereich dieser toten Zone die Stellvorrichtung 13 zur Schonung derselben nicht betätigt wird. Dies geschieht dadurch, daß bei Übereinstimmen des Sollwerts an der Klemmenanordnung 10 mit dem Istwert oder mit dem Istwert erhöht um 1 oder mit dem Istwert vermindert um 1 an einem der Ausgänge der Komparatoren 110 bis 112 ein 1-Signal erscheint, durch das über das NOR-Gatter 115 die UND-Gatter 116, 117 gesperrt werden, so daß kein Steuersignal zur Verstärkerstufe 12 und damit zur Stellvorrichtung 13 gelangen kann. Erst wenn sich Sollwert und Istwert um wenigstens die Zahl 2 unterscheiden wird die Sperrung über das NOR-Gatter 115 aufgehoben und eines der UND-Gatter 116 bzw. 117 wird durch den entsprechenden Ausgang des Komparators 111 betätigt. Durch Hinzufügung weiterer Komparatoren und Addierstufen kann diese tote Zone beliebig erweitert werden.

## Patentansprüche

1. Digitaler Stellregelkreis, insbesondere für Fahrzeuggeschwindigkeitsregler in Kraftfahrzeugen, mit einer durch eine Soll-Istwert-Vergleichsvorrichtung (11) gesteuerten elektromechanischen Stellvorrichtung (13), vorzugsweise einem Stellmotor, mit einem mit der Stellvorrichtung (13) gekoppelten Stellungsdetektor (16) zur Erzeugung des Istwerts für die Vergleichsvorrichtung (11), der eine durch wenigstens eine Abtastvorrichtung (17) abtastbare Vielzahl von Marken (162, 164) aufweist, die bei Bewegung der Stellvorrichtung (13) einer Zählvorrichtung (24) zuführbar sind, deren Zählrichtung in Abhängigkeit der Bewegungsrichtung der Stellvorrichtung (13) festlegbar ist und deren Zählerstand den Istwert bildet, mit einer zweiten Abtastvorrichtung zur Abtastung von weiteren Normierungsmarken auf dem Stellungsdetektor, dadurch gekennzeichnet, daß die beiden Abtastvorrichtungen mit einer Erkennungslogik (21) verbunden sind, in der durch Dekodierung der Signalkombinationen der beiden Abtastvorrichtungen (17, 18) die beiden Endstellungen erkennbar sind, und daß bei Erreichen der Endstellungen die Zählvorrichtung (24) durch die Erkennungslogik (21) auf die den Endstellungen zugeordneten Zahlenwerte setzbar ist.

2. Stellregelkreis nach Anspruch 1, dadurch gekennzeichnet, daß eine Korrekturvorrichtung (27) vorgesehen ist, durch die bei Erreichen eines bestimmten Zählerstands in der Zählvorrichtung (24), der im wesentlichen einer der beiden Endstellungen entspricht, und bei gleichzeitigem Nichtanspechen der Erkennungslogik (21) durch Beeinflussung des Istwerts eine weitere Bewegung der Stellvorrichtung (13) in Richtung der Endstellung aufrechterhalten bleibt.

3. Stellregelkreis nach Anspruch 2, dadurch gekennzeichnet, daß die Korrekturvorrichtung (27) zwei Vergleichsvorrichtungen (270, 271) enthält, denen der Zählerstand der Zählvorrichtung (24) als Istwert und die den beiden Endstellungen entsprechenden Zahlenwerte als Sollwerte zugeführt sind, daß die Ausgangssignale der Vergleichsvorrichtungen (270, 271) mit denen der Erkennungslogik (21) über Verknüpfungsglieder (272, 273) verknüpft werden, durch deren Ausgangssignale eine Zählfrequenz der Zählvorrichtung zuführbar und die Zählrichtung festlegbar ist.

4. Stellregelkreis nach Anspruch 1, dadurch gekennzeichnet, daß eine Korrekturvorrichtung (27) vorgesehen ist, durch die bei Erreichen eines bestimmten Zählerstands in der Zählvorrichtung (24), der im wesentlichen einer der beiden Endstellungen entspricht, und bei einer gleichzeitig vorliegenden Zählrichtung in der Zählvorrichtung (24) in Richtung dieser Endstellung die Zählvorrichtung (24) für weitere Zählsignale sperrbar ist.

5. Stellregelkreis nach Anspruch 4, dadurch gekennzeichnet, daß die Korrekturvorrichtung (27) zwei Vergleichsvorrichtungen (270, 271) enthält, denen der Zählerstand der Zählvorrichtung (24) als Istwert und der der unteren Endstellung entsprechende Zahlenwert um einen geringen Zahlenwert vergrößert, bzw. der der oberen Endstellung entsprechende Zahlenwert um einen geringen Zahlenwert verkleinert

5

als Sollwerte zugeführt werden, daß die Ausgangssignale der Vergleichsvorrichtungen (270, 271) mit dem Signal zur Festlegung der Zählrichtung über ein Verknüpfungsglied (279) verknüpft sind, durch dessen Ausgangssignal eine Torstufe (221) für Zählsignale sperrbar ist.

6. Stellregelkreis nach einem der Ansprüche 1 bis 5, dadurch gekennzeichnet; daß der Stellungsdetektor (16) eine erste, die Vielzahl von Marken (162) enthaltende Ebene (161) aufweist, die durch die erste Abtastvorrichtung (17) abtastbar ist, daß eine zweite, durch die zweite Abtastvorrichtung (18) abtastbare Ebene (166) vorgesehen ist, wobei die eine Ebene Marken (167) an den beiden Stellungen aufweist, an denen sich die zugeordnete Abtastvorrichtung in den beiden Endstellungen befindet, und daß an den beiden Stellungen der anderen Ebene (161), an denen sich die andere Abtastvorrichtung (17) in den beiden Endstellungen befindet, einmal eine Marke (164) und einmal keine Marke vorgesehen ist.

## Claims

1. A digital control circuit, especially for vehicle speed regulators in motor vehicles comprising, an electromechanical adjusting device (13), preferably an adjusting motor, controlled by a set value-actual value-comparison device (11), a position detector (16) coupled to the adjusting device (13) for generating the actual value for the comparison device (11), which has a plurality of markings (162, 164) which can be sensed by at least one sensing device (17) and which can be transmitted on movement of the adjusting device (13) to a counting device (24) the direction of counting of which can be established in accordance with the direction of movement of the adjusting device (13) and the numerical condition of which forms the actual value, a second sensing device for sensing further standard markings on the position detector, characterised in that, the two sensing devices are connected to a distinguishing logic (21) in which the two limit positions can be distinguished by decoding the signal combinations from the two sensing devices (17, 18) and that on reaching the limit positions the counting device (24) can be set to the numerical values associated with the limit positions by the distinguishing logic (21).

2. A control circuit according to claim 1 characterised in that, a correction device (47) is provided through which, on reaching a predetermined numerical condition in the counting device (24), which corresponds substantially to one of the two limit positions, and with a simultaneous non-response of the distinguishing logic (21) due to the influence of the actual value, a further movement of the adjusting device (13) towards the limit position remains preserved.

3. A control circuit according to claim 2 characterised in that, the correction device (27) includes two comparison devices (270, 271) to which are transmitted the numerical conditon of the counting device (24) as an actual value and the numerical values corresponding to the two limit positions as set values, that the output signals from the comparison devices (270, 271) are combined with those from the distinguishing logic (21) through gates (272, 273) by means of the output signals from which a counting frequency can be transmitted to the counting device and the counting direction can be established.

4. A control circuit according to claim 1 characterised in that, a correction device (27) is provided through which, on reaching a predetermined numerical condition in the counting device (24), which corresponds substantially to one of the two limit positions, and with the simultaneous presence of a counting direction in the counting device (24) towards the said limit position, the counting device (24) can be blocked for further counting signals.

5. A control circuit according to claim 4 characterised in that, the correction device (27) includes two comparison devices (270, 271) to which are transmitted the numerical condition of the counting device (24) as an actual value and the numerical value corresponding to the lower limit position increased by a small numerical value or the numerical value corresponding to the upper limit position reduced by a small numerical value. as set values, that the output signals from the comparison devices (270, 271) are combined with the signal for establishing the counting direction through a gate (279) by means of the output signal from which a gate stage (221) for counting signals can be blocked.

6. A control circuit according to one of claims 1 to 5 characterised in that the position detector (16) has a first level (161) containing the plurality of markings (162) and which can be sensed by the first sensing device (17), that a second level which can be sensed by the second sensing device (18) is provided wherein one level has markings (167) at both positions at which the associated sensing device is located in the two limit positions, and that at the two positions on the other level (161), at which the other sensing device (17) is located in the two limit positions, now a marking (164) and now no marking is provided.

## Revendications

1. Circuit de réglage de manoeuvre numérique, notamment pour régulateurs de vitesse de vehicules automobiles, notamment pour régulateurs de vitesse de véhicules automobiles, avec un dispositif de manoeuvre électromécanique (13), de préférence un servomoteur, commandé par un dispositif comparateur valeur de consigne-valeur réelle (11) avec un détecteur de position (16) accouplé avec le dispositif de manoeuvre (13) pour produire la valeur réelle destinée au dispositif comparateur (11), comportant une série de repères (162, 164) palpés par au moins un organe de palpage (17), avec transmission lors du mouvement du dispositif de manoeuvre (13), à un organe compteur (24) dont le sens de comptage est déterminé en fonction du sens du mouvement du dispositif de manoeuvre (13), le niveau de comptage de cet organe constituant la valeur réelle, avec un second organe de palpage pour palper d'autres repères de normalisation sur le détecteur de position, caractérisé en ce que les deux organes de palpage sont reliés par un système de détection logique (21), dans lequel, par décodage des combinaisons de signaux des deux organes de palpage (17, 18), les deux positions d'extrémité peuvent être reconnues, et en ce que lorsque sont atteintes les positions d'extrémité, l'organe compteur (24) peut être commandé par la système de détection logique (21) sur les valeurs numériques associées aux positions d'extrémité.

2. Circuit de réglage de manoeuvre selon la revendication 1, caractérisé en ce qu' est prévu un dispositif de correction (27) par lequel, lorsqu'est atteint un niveau de comptage déterminé dans l'organe compteur (24), correspondant essentiellement à l'une des deux positions d'extrémite, et sans fonctionnement simultané du système de détection logique (21), par action sur la valeur réelle, un mouvement supplémentaire du dispositif de manoeuvre (13) en direction de la position d'extrémité est maintenu.

3. Circuit de réglage de manoeuvre selon la revendication 2, caractérisé en ce que le dispositif de correction (27) contient deux organes comparateurs (270, 271) auxquels sont envoyés le niveau de comptage de l'organe compteur (24) en tant que valeur réelle et lés deux valeurs numériques correspondant aux deux positions d'extrémité en tant que valeurs de consigne, en ce que les signaux de sortie des organes comparateurs (270, 271) sont combinés avex ceux du système de détection logique (21) au moyen d'organes combinateurs (272, 273) dont les signaux de sortie permettent d'envoyer une fréquence de comptage à l'organe compteur et de fixer le sens de comptage.

4. Circuit de réglage de manoeuvre selon la revendication 1, caractérisé en ce qu' est prévu un dispositif de correction (27) par lequel, lorsqu'est atteint un niveau de comptage déterminé dans l'organe compteur (24), correspondant essentiellement à l'une des deux positions d'extrémité, et avec, en même temps, un sens de comptage dans l'organe compteur (24) en direction de cette position d'extrémité, l'organe compteur (24) peut être bloqué pour d'autres signaux de comptage.

5. Circuit de réglage de manoeuvre selon la revendication 4, caractérisé en ce que le dispositif de correction (27) contient deux organes comparateurs (270, 271) auxquels sont envoyés en tant que valeur réelle le niveau de comptage de l'organe compteur (24) et an tant que valeurs de consigne la valeur numérique correspondant à la position d'extrèmité inférieure augmentée d'une faible valeur numérique ainsi que la valeur numérique correspondant à la position d'extrémité supérieure diminuée d'une faible valeur numérique, en ce que les signaux de sortie des organes comparateurs (270, 271) sont combinés avec le signal pour déterminer le sens de comptage au moyen d'un organe combinateur (279) dont le signal de sortie permet de bloquer un étage porte (221) pour des signaux de comptage.

6. Circuit de réglage de manoeuvre selon l'une des revendications 1 à 5, caractérisé en ce que le détecteur de position (16) présente un premier plan (161) contenant la série de repères (162), pouvant être palpé par le premier organe de palpage (17), en ce qu' est prévu un second plan (166) pouvant être palpé par la second organe de palpage (18), l'un des plans comportant des reprères (167) sur lesquels se trouve l'organe de palpage associé dans les deux positions d'extrémité, et en ce que dans les deux positions de l'autre plan (161) sur lesquelles se trouve l'autre organe de palpage (17) dans les deux positions d'extrémité, sont prévus, d'une part, un repère (164) et, d'autre part, aucun repère.

Fig.1

Fig.2

# Fig.3

# Fig.4

Fig.5

Fig.6

3